(19) Europäisches Patentamt
European Patent Office
Office européen des brevets

(11) Publication number: 0 337 791 B1

(12) # EUROPEAN PATENT SPECIFICATION

(45) Date of publication of patent specification: 16.03.94

(51) Int. Cl.5: C09K 3/10, C08L 83/04

(21) Application number: 89303696.2

(22) Date of filing: 13.04.89

(54) **Self leveling highway sealant.**

(30) Priority: 15.04.88 US 181883

(43) Date of publication of application:
18.10.89 Bulletin 89/42

(45) Publication of the grant of the patent:
16.03.94 Bulletin 94/11

(84) Designated Contracting States:
BE DE FR GB

(56) References cited:
EP-A- 0 240 163
CA-A- 1 195 033
US-A- 3 817 909
US-A- 3 996 184

(73) Proprietor: DOW CORNING CORPORATION
3901 S. Saginaw Road
Midland Michigan 48686-0994(US)

(72) Inventor: Spells, Sherwood
5609 Lamplighter Lane
Midland Michigan(US)

(74) Representative: Lewin, John Harvey et al
ELKINGTON AND FIFE
Prospect House,
8 Pembroke Road
Sevenoaks, Kent, TN13 1XR (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 337 791 B1

## Description

This invention relates to highway sealants which are self leveling when applied.

Concrete highways are subjected to expansion and contraction forces due to temperature changes which require that joints be produced in the roadway which can allow for this expansion and contraction without damage to the concrete itself. These joints must be filled in some manner so that they do not become filled with rocks and surface water during service. For example, if the joint becomes filled with rocks, the concrete is broken the next time the highway expands because there is no free space into which the concrete can expand.

Among the means used to fill the joints to keep out rocks have been molded elastomeric forms and poured or injected thermoplastic and/or elastomeric filling materials. When the roadway expands or contracts, these materials or devices allow the joint to become narrower or wider without subjecting the concrete to high physical forces. The simplest joint filler has been the use of hot melt asphalt. This functions at first, but fails due to hardening from aging or lowering of temperatures. More elaborate solutions have been molded elastomeric devices and the use of elastomers, such as polyurethanes and silicones, as joint filling materials.

U.S. Patent No. 3,766,127, issued October 16, 1973, teaches a low modulus room temperature vulcanizable silicone elastomer. The composition is based upon an acetamido containing chain extender and crosslinker in combination with a hydroxyl endblocked polydiorganosiloxane. When fillers are used in the composition it is useful as a sealant.

U.S. Patent No. 3,817,909, issued June 18, 1974, teaches a low modulus room temperature vulcanizable silicone elastomer is obtained by mixing a hydroxyl endblocked polydiorganosiloxane, non-acidic, non-reinforcing filler, acetamido containing chain extender and crosslinker which is an aminoxysilicon compound having 3 to 10 aminoxy groups per molecule. The sealant is useful in building construction.

U.S. Patent No. 3,996,184, issued December 7, 1976, teaches a one package, low modulus, room temperature vulcanizable silicone elastomer composition having improved slump characteristics at low temperatures. This composition is obtained by mixing a hydroxyl endblocked polydimethylsiloxane, non-acidic, non-reinforcing filler, methylvinyldi-(N-acetamido)silane, an aminoxysilicon compound having 3 to 10 aminoxy groups per molecule and a diluent selected from N,N-dimethylformamide, acetonitrile or N-n-butylacetamide. The elastomer is useful in building construction.

Materials such as discussed above have been used as highway sealants. Such materials have served very well, but they are difficult to apply because they must be extruded into the joint and then tooled to obtain a good seal to the concrete sides of the joint, since the sealants are not self-leveling. CA-A-1 195 033 discloses RTV organopolysiloxane compositions including an optionally treated filler.

A silicone sealant composition which is self leveling when applied is obtained by combining a hydroxyl endblocked polydiorganosiloxane, a combination of treated and untreated filler, acetamidosilane chain extender, acetamidosilane crosslinker and diluent in the required proportions.

This invention relates to a composition, which is stable in the absence of moisture but curable at room temperature upon exposure to moisture to a silicone elastomer and being self leveling when applied to a horizontal surface, said composition consisting essentially of a mixture prepared by mixing under anhydrous conditions (A) 100 parts by weight of a hydroxyl endblocked polydiorganosiloxane having a viscosity at 25°C of from 1.8 to 125 Pa•s and in which the organic groups are selected from the group consisting of methyl, ethyl, vinyl, phenyl and 3,3,3-trifluoropropyl radicals, in said polydiorganosiloxane no more than 50 percent of the organic groups being phenyl or 3,3,3-trifluoropropyl radicals and no more than 10 percent of the organic groups being vinyl radicals, (B) from 1 to 150 parts by weight of non-acidic, non-reinforcing filler having an average particle size of from 1 to 8 micrometers, said filler consisting of from 95 to 5 percent by weight of an untreated filler and from 5 to 95 percent by weight of a treated filler, said treated filler having been treated with a treating agent selected from the group consisting of calcium stearate and stearic acid, (C) from 2.5 to 10 parts by weight inclusive of a silane of the general formula

$$R(CH_3)Si(\overset{R'}{\overset{|}{N}}-\overset{O}{\overset{\|}{C}}CH_3)_2$$

in which R is an organic radical selected from the group consisting of methyl, ethyl, vinyl and phenyl and R' is an organic radical selected from the group consisting of methyl, ethyl and phenyl, said silane being

present in an amount sufficient to provide at least one silane molecule per hydroxyl of the polydiorganosiloxane, (D) a crosslinking agent selected from the group consisting of 0.3 to 4.2 parts by weight inclusive of a trifunctional silane of the general formula

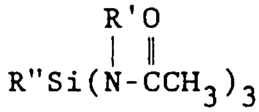

in which R' is defined above and R" is the same as R, at least one of R and R" being vinyl; and 1 to 6 parts by weight inclusive of an aminoxysilicon compound having from 1 to 100 silicon atoms per molecule and from 3 to 10 aminoxy groups per molecule, said aminoxy group having a general formula -OX in which X is a monovalent amine radical selected from the group consisting of $-NR_2$ and a heterocyclic amine, R is a monovalent hydrocarbon radical, the -OX group being bonded to silicon atoms through an SiO bond, the remaining valences of the silicon atoms in the aminoxysilicon compound being satisfied by divalent oxygen atoms which link the silicon atoms of the aminoxysilicon compounds having two or more silicon atoms per molecule through silicon-oxygen-silicon bonds and by monovalent hydrocarbon radicals and halogenated monovalent hydrocarbon radicals bonded to the silicon atoms through silicon-carbon bonds, there being an average of at least one monovalent hydrocarbon radical or halogenated monovalent hydrocarbon radical per silicon atom, (E) from 1 to 50 percent by weight of the total composition of a diluent selected from the group consisting of non-reactive silicone fluid and organic diluent, said organic diluent selected from the group consisting of aliphatic petroleum naphthas, aromatic hydrocarbons and polyethers, said silane (C) and said crosslinking agent (D) being present in amounts sufficient to provide a combined weight of at least 3.5 parts by weight per 100 parts by weight of (A) and said crosslinking agent (D) being present in an amount which is not greater than the weight of the silane (C); said composition when cured for seven days at 25 °C. exposed to an air atmosphere having 50 percent relative humidity resulting in a silicone elastomer having an elongation of at least 600 percent, a durometer on the Shore A scale of from 5 to 20 inclusive and a modulus at 150 percent elongation of less than 345 kPa (50 pounds per square inch).

Silicone compositions have been available for use as low modulus sealants useful in building construction. They have also been used as joint sealants in highways. Their use in highways has been restricted because of the necessity of tooling the sealant after it has been extruded into the joint in order to force the sealant into intimate contact with the sides of the joint in order to get good adhesion. It is also necessary to tool the joint in order to smooth the sealant surface and assure that the surface of the sealant is below the surface of the roadway. This additional step of tooling the sealant after insertion into the joint has resulted in higher labor costs and more material waste; when compared to the use of joint sealants such as hot melt asphalt, which is poured into place to give the proper degree of fill. This fluid material flows into contact with the joint sides and self levels its surface. A search for a composition which would be self leveling at ambient temperature resulted in the composition of this invention.

The hydroxyl endblocked polydiorganosiloxanes (A) can have a viscosity at 25 °C of from about 1.8 to 125 Pa•s, preferably from 3.5 to 70 Pa•s. These polydiorganosiloxane can be monodispersed, polydispersed or blends of varying viscosities as long as the average viscosity falls within the limits defined above. The hydroxyl endblocked polydiorganosiloxanes have organic groups selected from methyl, ethyl, vinyl, phenyl and 3,3,3-trifluoropropyl radicals. The organic groups of the polydiorganosiloxane contain no more than 50 percent phenyl or 3,3,3-trifluoropropyl radicals and no more than 10 percent vinyl radicals based upon the total number of radicals in the polydiorganosiloxane. Other monovalent hydrocarbon radicals and halogenated monovalent hydrocarbon radicals in small amounts can be present in the polydiorganosiloxane. The diorganosiloxane units of the hydroxyl endblocked polydiorganosiloxane can be, for example, dimethylsiloxane, diethylsiloxane ethylmethylsiloxane, diphenylsiloxane, methylphenylsiloxane, methylvinylsiloxane and 3,3,3-trifluoropropylmethylsiloxane. The term polydiorganosiloxane as used herein does not preclude small amounts of other siloxane units such an monoorganosiloxane units. The hydroxyl endblocked polydiorganosiloxanes are known in the art and can be made by known commercial methods. The preferred hydroxyl endblocked polydiorganosiloxane is hydroxyl endblocked polydimethylsiloxane.

The compositions of this invention contain from 0 to 150 parts by weight of non-acidic, non-reinforcing filler having an average particle size of from 1 to 8 micrometers per 100 parts by weight of hydroxyl endblocked polydiorganosiloxane. From 95 to 5 percent by weight of the filler is present as untreated filler. From 5 to 95 percent by weight of the filler is present as treated filler. The treated filler is treated with a treating agent selected from the group consisting of calcium stearate and stearic acid. The fillers are non-acidic, non-reinforcing filler and include for example, calcium carbonate, ferric oxide, diatomaceous earth, alumina, hydrated alumina, titanium dioxide, glass microballons, organic fillers, resins such as silicone resins, crushed quartz, calcium sulfate and the like.

The filler is treated with the treating agent by either coating or reacting the filler with the treating agent. Treated fillers are commercially available, such as the calcium carbonate treated with calcium stearate that is known as CS-11 from Georgia Marble Company of Tate, Georgia and Kotamite from Cyprus Industrial Minerals Company of Englewood, Colorado.

The silane (C) of the general formula

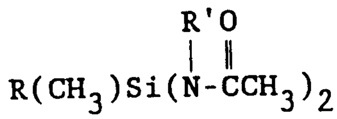

in which R is an organic radical selected from the group consisting of methyl, ethyl, vinyl and phenyl and R′ is an organic radical selected from the group consisting of methyl, ethyl and phenyl, reacts with the hydroxyl endblocked polydiorganosiloxane to give a longer polymer. The longer polymer gives a tougher, lower modulus material that is ideal for this type of application. The silanes include, for example, methylvinyldi-(N-methylacetamido)silane and methylvinyldi-(N-phenylacetamido)silane. A preferred silane (C) is methylvinyldi-(N-methylacetamido)silane. These amidosilanes can be prepared by reacting a chlorosilane with an alkali metal salt of an appropriate N-organoacetamide. This method is further detailed in U.S. Patent No. 3,776,933, issued December 4, 1973 by Toporcer and Crossan.

The amidosilanes can be prepared as by the following illustration: mixing a sodium salt of N-methylacetamide with methylvinyldichlorosilane in an inert organic solvent such as toluene, filtering the by-produced sodium chloride from the toluene-product solution and thereafter removing the toluene by vacuum distillation to obtain the product, methylvinyldi(N-methylacetamido)silane.

The crosslinking agent (D) is selected from the group consisting of 0.3 to 4.2 parts by weight inclusive of a triamidosilane of the general formula

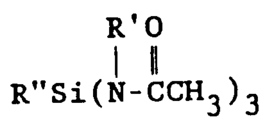

in which R' is defined above and R'', is the same as R, at least one of R and R'' being vinyl; and 1 to 6 parts by weight inclusive of an aminoxysilicon compound having from 1 to 100 silicon atoms per molecule and from 3 to 10 aminoxy groups per molecule, said aminoxy group having a general formula -OX in which X is a monovalent amine radical selected from the group consisting of $-NR_2$ and a heterocyclic amine, R is a monovalent hydrocarbon radical, the -OX group being bonded to silicon atoms through an SiO bond, the remaining valences of the silicon atoms in the aminoxysilicon compound being satisfied by divalent oxygen atoms which link the silicon atoms of the aminoxysilicon compounds having two or more silicon atoms per molecule through silicon-oxygen-silicon bonds and by monovalent hydrocarbon radicals and halogenated monovalent hydrocarbon radicals bonded to the silicon atoms through silicon-carbon bonds, there being an average of at least one monovalent hydrocarbon radical or halogenated monovalent hydrocarbon radical per silicon atom.

The triamidosilane of the general formula

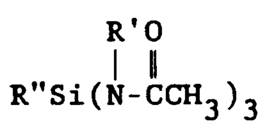

reacts with the hydroxyl endblocked polydiorganosiloxane to crosslink the polymer and so produce an elastomer. R′ is defined above and R'' is the same as R. These triamidosilanes include, for example, methyltri-(N-methylacetamido)silane, vinyltri-(N-methylacetamido)silane, methyltri-(N-ethylacetamido)silane,

vinyltri-(N-ethylacetamido)silane, methyltri-(N-phenylacetamido)silane and vinyltri-(N-phenylacetamido)-silane. These triamidosilanes can be prepared by reacting the appropriate chlorosilane with an alkali metal salt of an appropriate N-organoacetamide, as further detailed in U.S. Patent No. 3,776,933, issued December 4, 1973, and U.S. Patent No. 3,776,934, issued December 4, 1973. A preferred triamidosilane is methyltri-(N-methylacetamido)silane.

The aminoxysilicon compounds used as crosslinking agents can be silicon compounds having from 1 to 100 silicon atoms per molecule in which there are from 3 to 10 aminoxy groups per molecule. The aminoxysilicon compounds can be prepared by the method shown in U.S. Patent No. 3,441,583, issued April 29, 1969, which also illustrates many aminoxysilicon compounds. The aminoxy silicon compounds include silanes and siloxanes. The aminoxy group which is bonded to the silicon atoms through silicon-oxygen bonds can be represented by the general formula -OX wherein X is a monovalent amine radical of the group $-NR_2$ and heterocyclic amine. R represents a monovalent hydrocarbon radical. The $-NR_2$ groups can be represented by N,N-diethylamino, N,N-ethylmethylamino, N,N-dimethylamino, N,N-diisopropylamino, N,N-dipropylamino, N,N-dibutylamino, N,N-dipentylamino, N,N-hexylamino, N,N-dibutylamino, N,N-methylpropylamino, N,N-diphenylamino and N,N-methylphenylamino. The heterocyclic amines can be illustrated by ethyleneimino, pyrrolidino, piperidino and morpholino. Additional aminoxysilicon compounds can be found in U.S. Patent No. 3,996,184, issued December 7, 1976. A preferred aminoxysilicon compound is a copolymer having per molecule an average of two trimethylsiloxane units, five methyl(N,N-diethylaminoxy)-siloxaneunits and three dimethylsiloxane units.

The amount of amidosilane (C) can be from 2.5 to 10 parts by weight per 100 parts by weight of polydiorganosiloxane. The most preferred compositions have from 4 to 8 parts by weight. When the amount of amidosilane is less than 2.5 parts, the resulting composition cures to a silicone elastomer with sufficiently higher modulus so that it would no longer be classified as a low modulus silicone elastomer. No advantages are experienced in exceeding 10 parts by weight because slower cures and less desirable physical properties are observed.

When the crosslinking agent selected is a triamidosilane, the amount of triamidosilane can be from 0.3 to 4.2 parts by weight per 100 parts by weight of the hydroxyl endblocked polydiorganosiloxane, preferably from 1 to 1.75 parts by weight when amidosilane (C) is present in an amount of from 5 to 8 parts by weight.

When the crosslinking agent selected is aminoxysilicon compound, the amount of aminoxysilicon compound can be from 1 to 6 parts by weight per 100 parts by weight of hydroxyl endblocked polydiorganosiloxane. The preferred amount of aminoxysilicon compound is dependent to some extent upon the viscosity of the hydroxyl endblocked polydiorganosiloxane. The larger amounts of aminoxysilicon compound are preferably used with the higher viscosity polydiorganosiloxane. If the amount of aminoxysilicon compound exceeds 6 parts, the resulting cured products are high modulus silicone elastomers. The preferred amount of aminoxysilicon compound is from 2 to 4 parts. However, the amount of aminoxysilicon compound regardless of viscosity should not exceed the weight of the amidosilane (C) and the combined weight of amidosilane (C) and aminoxysilicon compound (D) should be greater than 5 parts. Lower amounts of aminoxysilicone compound can be used, but the shelf life will be limited. Amounts of aminoxysilicon compound exceeding the weight of silane (C) result in cured products having high modulus.

The compositions of this invention contain from 1 to 50 percent by weight of a diluent, based upon the weight of the total composition. The diluent is selected from the group consisting of non-reactive silicone fluid and organic diluent. The non-reactive silicone fluid can be a homopolymer of $R''_2SiO$ units where R" is methyl, ethyl, propyl, phenyl, vinyl or 3,3,3,trifluoropropyl and R" can be the same or different in each unit. The endblocking unit of the silicone diluent can be $R''_3SiO$ where R" is as described above. Preferably, the viscosity of the silicone diluent is from 0.02 to 1 Pa•s, with from 0.02 to 0.10 most preferred. Less of the diluent can be used when the lower range of viscosity is selected. The organic diluent is selected from the group consisting of aliphatic petroleum naphthas, such as mineral spirits and VM&P naphtha, represented by the petroleum naphatha having a flash point of about 38°C (100°F.) and sold as Kwick Dry; aromatic petroleum hydrocarbons, such as the solvent having a boiling point of about 182°C (360°F.) and a flash point of about 66°C (150°F.) and sold as SC 150; and polyethers containing less than 1 percent hydroxyl groups, such as the polyether having a flash point of about 60°C (140°F.) and sold as Ansul 141. Chlorinated hydrocarbons, such as chlorothene, are unsuitable because they inhibit the cure. It is recommended that any organic diluent chosen be evaluated at the desired use level in the composition to make sure that the composition will still cure properly. For example, when 210 parts of the aromatic solvent SC 150 was used to dilute 1000 parts of base composition, the resulting sealant did not cure properly, but the cure was satisfactory when half of this amount of this diluent was used. A preferred amount of diluent is from 5 to 25 percent of diluent based upon the total weight of the composition.

Other conventional additives can be used so long as they are neutral or basic, including pigments, dyes, antioxidants, heat stability additives and the like.

The compositions are preferably made by mixing the hydroxyl endblocked polydiorganosiloxane and filler to make a homogeneous mixture with the filler well dispersed. A suitable mixture can usually be obtained in one hour using commercial mixers. The resulting mixture is preferably deaired and then a mixture of the amidosilane and crosslinking agent is added and mixed with the polymer and filler mixture. This mixing is done under essentially anhydrous conditions and then the resulting composition is put into containers for storage under essentially anhydrous conditions. The diluent can be mixed into the composition in any manner and at any time during the preparation, but it is preferred to add it after the polymer and filler have been mixed as a better filler dispersion takes place. Once one package compositions are made, they are stable, that is they do not cure, if the essentially moisture free conditions are maintained, but will cure to low modulus silicone elastomers when exposed to moisture at room temperature. Although the present compositions are designed as one package compositions, the components could be packaged in two or more packages, if desired.

The compositions of this invention provide a sealant material which is self leveling when extruded from the storage container into a horizontal joint; that is, the sealant will flow under the force of gravity sufficiently to provide intimate contact between the sealant and the sides of the joint space. This allows maximum adhesion of the sealant to the joint surface to take place. The self leveling also does away with the necessity of tooling the sealant after it is placed into the joint, such as is required with a sealant which is designed for use in both horizontal and vertical joints.

The compositions of this invention, after cure by exposure to air atmosphere for seven days at 25°C and 50 percent relative humidity, have an elongation of at least 600 percent, a durometer on the Shore A scale of from 5 to 20 and a modulus at 150 percent elongation of less than 345 kPa (50 pounds per square inch). These requirements insure that the seal formed by this composition will not be broken by the thermally caused movement of a highway during exposure to extremes in temperature differences.

The compositions of the present invention do not require a catalyst to aid in curing the composition and it is observed that many of the conventional curing catalysts used in room temperature vulcanizable silicone elastomer compositions are detrimental to the curing of the compositions.

The following examples are included for illustrative purposes only and should not be construed as limiting the invention which is properly set forth in the appended claims. All parts are parts by weight. The amounts shown in parenthesis are the amounts based upon 100 parts by weight of the hydroxyl endblocked polydiorganosiloxane (A).

## Example 1

A series of compositions were prepared to illustrate the effect of filler type on the flowability of a sealant. A mixture was prepared by mixing 40.7 (93) parts of hydroxyl endblocked polydimethylsiloxane fluid having a viscosity of about 50 Pa•s at 25°C. and a hydroxyl content of about 0.057 weight percent, 2.87 (7) parts of hydroxyl endblocked polydimethylsiloxane having a viscosity of about 4.0 Pa•s at 25°C., 2.35 (5.4) parts of chain extender consisting of about 80 percent by weight of methylvinyldi-(N-methylacetamido)silane with the remaining 20 percent being impurities consisting primarily of other similar silanes and xylene, 1.4 (3.2) parts of aminoxy-functional crosslinker which was a copolymer having per molecule an average of two trimethylsiloxane units, five methyl(N,N-diethylaminoxy)-siloxane units and three dimethylsiloxane units, 0.95 part of dimethylformamide and 0.1 (2.2) part of carbon black. The amount of calcium carbonate filler having an average particle size of about 3 micrometers (filler A) and the amount of treated calcium carbonate filler having a surface treated with calcium stearate and a particle size of about 3 micrometers (filler B) used is shown in Table I. The amount of organic petroleum naphtha solvent, sold as Kwick Dry, used in each formulation is also shown in Table I.

Each composition was evaluated for flowability by means of a button slump test and a self-leveling test. The button slump test consisted of a flow measurement using the jig described in ASTM D 2202. A sample of the composition was placed in the jig, consisting of a hole 38 mm in diameter and 6.5 mm deep, then standing the jig vertically and forcing the composition out of the hole and measuring the amount it flowed down the face of the jig, in the time indicated in the table. The more flowable the composition, the farther it flowed in a given time.

The self-leveling test consisted of a visual test performed by drawing a circle approximately the size of a quarter upon a sheet of paper, then extruding a portion of the composition into the center of the circle so that about 3/4 of the area is filled with sealant. After 2 minutes, the test piece is evaluated to see if the sealant flowed out to the circle, indicating that the composition flows under the force of gravity.

The sealant was extruded from the storage tube and formed into test sheets, 80 millimeters thick, and allowed to cure at laboratory conditions. The cured sheets were cut into test specimens and tested for physical properties in accordance with ASTM D 2240 for durometer, and in accordance with ASTM D 412 for tensile strength, elongation and modulus.

Table I

| Composition | 1* | 2* | 3* | 4 |
|---|---|---|---|---|
| Filler A, parts | 51.7 | -.- | 25.85 | 25.85 |
| Filler B, parts | -.- | 51.7 | 25.85 | 25.85 |
| Solvent, parts | 20 | 20 | -.- | 20 |
| Button Slump | 10cm(4in)/120s | 10cm(4in)/45s | 0.5cm(0.2in)/120s | 12cm(4.7in)/7s |
| Self Leveling | no | no | no | yes |
| Durometer, Shore A | 11 | -- | -- | 9 |
| Elongation, percent | 1331 | -- | -- | 1500 |
| 150 % Moduluis,kPa(psi) | 214(31) | -- | -- | 159(23) |

* comparative example

Example 2

A comparison was prepared to illustrate the difference between a treated filler and a mixture of treated and untreated filler.

A treated filler was prepared by treating a calcium carbonate filler, having an average particle size of about 3 micrometers, with sufficient calcium stearate to give about 0.5 percent by weight of calcium stearate (filler A).

Compositions were then prepared by mixing 40.7 (100) parts of the higher viscosity hydroxyl endblocked polydimethylsiloxane fluid of Example 1, 2.35 (5.8) parts of the chain extender of Example 1, 1.4 (3.4) parts of the crosslinker of Example 1, 0.95 (2.3) part of dimethylformamide, 10 (24.6) parts of organic petroleum naphtha solvent (Kwick Dry) and the parts of filler shown in Table II. Filler B is a commercial treated filler having about 1 weight percent calcium stearate treatment on a calcium carbonate filler having an average particle size of about 3 micrometers. Filler C is the same filler without a surface treatment.

After preparation, each composition was evaluated for flowability by means of the button slump test and self-leveling test.

It is necessary to use a combination of treated and untreated filler in order to obtain satisfactory flow characteristics.

Table II

| | Invention | Comparative Example |
|---|---|---|
| Filler A, parts | -.- | 51.7(127) |
| Filler B, parts | 25.85(63.5) | -.- |
| Filler C, parts | 25.85(63.5) | -.- |
| Button Slump | 10cm(4in)/55s | 0.5cm(0.2in)/55s |
| Self Leveling | yes | no |

Example 3

A series of compositions were prepared using different amounts of solvent to evaluate the effect upon self-leveling, using the ingredients of Example 1.

Each composition was prepared by mixing 40.7 (93.5) parts of the higher viscosity hydroxyl endblocked polydiorganosiloxane, 2.81 (6.5) parts of the lower viscosity hydroxyl endblocked polydiorganosiloxane, 2.35 (5.4) parts of chain extender, 1.4 (3.2) parts of crosslinker, 0.95 (2.2) part of dimethylformamide, 25.85 (59) parts of the treated filler, 25.85 (59) parts of the untreated filler and the parts of petroleum naphtha solvent (Kwick Dry) shown in Table III. The button slump and self-leveling of each composition was then evaluated, with the results shown in Table III.

Table III

| Composition | 1 | 2 | 3 | 4 | 5+ |
|---|---|---|---|---|---|
| Solvent, parts | 20.0 | 15.7 | 10.0 | 5.2 | 0.0 |
| Solvent, percent of composition | 16.7 | 13.0 | 9.1 | 4.8 | 0.0 |
| Button Slump | 10cm(4in)/8s | 10cm(4in)/20s | 10cm(4in)/45s | -/- | 0.5cm(0.2)/45s |
| Self-leveling | yes* | yes* | yes* | yes* | no |
| Durometer,A | 9 | 9 | 10 | 11 | 11 |
| Elongation, % | 1640 | 1630 | 1690 | 1640 | 1540 |
| 150 % Modulus | 20 | 21 | 23 | 24 | 25 |

* rate decreases as solvent amount decreases
\+ comparative example

Example 4

A series of compositions using different solvents was prepared.

Each composition was prepared by mixing the following ingredients, as in Example 1; 40.7 (98.8) parts of the higher viscosity polydiorganosiloxane, 0.49 (1.2) part of a trimethylsilyl endblocked polydimethylsiloxane fluid having a viscosity of about 0.2 Pa•s at 25 °C, 2.35 (5.7) parts of the chain extender, 1.4 (3.4) parts of the crosslinker, 0.95 (2.3) part of dimethylformamide, 38.8 (94) parts of untreated filler, 12.9 (31) parts of treated filler and 10 (24) parts of the indicated solvent. Solvent (a) was trimethylsilyl endblocked polydimethylsiloxane fluid having a viscosity of about 0.05 Pa•s at 25°C, solvent (b) was odorless mineral spirits and solvent (c) was an aliphatic petroleum naphtha sold as #140 Solvent 66.

Each composition was evaluated for Button slump and Self-leveling. A sample of each composition was also formed into a sheet and allowed to cure. Test samples were cut from the cured sheet and evaluated for physical properties as shown in Table IV, testing being in accordance with ASTM D-412.

Table IV

| Composition | 1 | 2 | 3 |
|---|---|---|---|
| Solvent | a | b | c |
| Button slump | 4cm(1.6in)/60s | 7cm(2.8in)/60s | 10cm(4.0in)/55s |
| Self-leveling | yes | yes | yes |
| Tensile Strength, kPa(psi) | 255(37) | 207(30) | 462(67) |
| Percent Elongation | 1521 | 1411 | 1547 |
| 150% Modulus, kPa(psi) | 117(17) | 124(18) | 172(25) |

Example 5

Compositions were prepared using different ratios of treated to untreated filler.

Composition A was prepared by mixing 40.8 (100) parts of the high viscosity hydroxyl endblocked polydimethylsiloxane fluid of Example 1, 2.1 parts (5.2) parts of chain extender, 1.26 (3.1) parts of crosslinker, 9.05 (22.2) parts of trimethylsilyl endblocked polydimethylsiloxane having a viscosity of about 0.1 Pa•s at 25°C, 12.95 (31.7) parts of treated filler and 32.39 (79.4) parts of untreated filler.

Composition B was prepared by mixing 38.0 (100) parts of the high viscosity hydroxyl endblocked polydimethylsiloxane fluid of Example 1, 2.3 parts (6.0) parts of chain extender, 1.27 (3.3) parts of crosslinker, 9.01 (23.7) parts of trimethylsilyl endblocked polydimethylsiloxane having a viscosity of about 0.1 Pa•s at 25°C, 36.25 (95.3) parts of treated filler and 12.02 (31.7) parts of untreated filler.

Each composition was then evaluated for self-leveling characteristics, with the results shown in Table V.

Table V

| Composition | A | B |
|---|---|---|
| Weight Percent Treated Filler, based on total filler weight | 28.6 | 75.0 |
| Button slump | 4.8cm(1.9in/60s | 3.0cm(1.2in)/60s |
| Self-leveling | yes | yes |

Example 6

A series of compositions using different solvents was evaluated.

A base was prepared by mixing 2000 g of the higher viscosity polydimethylsiloxane of Example 1, 1905.9 g of the untreated filler and 635.3 g of the treated filler.

Then 1000 g (100) of this base was mixed with 24.65 g (5.6) of the chain extender, 14.69 g (3.4) of the crosslinker, 9.65 g (2.2) of dimethylformamide and 105 g (24) of the solvent shown in Table VI. The filler was 557 g (127) of the composition, being 75 percent untreated filler and 25 percent treated filler. The above figures in parentheses are the parts by weight based upon 100 parts of the polydimethylsiloxane.

The results are shown in Table VI.

Table VI

| | A | B | C+ | D | E* |
|---|---|---|---|---|---|
| Solvent<br>Button Slump, cm/60s(in/60s),<br>Self-leveling | 1<br>3.0 (1.2)<br>yes | 2<br>4.3 (1.7)<br>yes | 3<br>2.3 (0.9)<br>yes | 4<br>7.1 (2.8)<br>yes | 5<br>0.5 (0.2)<br>no |

Solvent 1 was 0.02 Pa•s viscosity trimethylsilyl endblocked polydimethylsiloxane.
Solvent 2 was an aromatic hydrocarbon (SC# 150)
Solvent 3 was an ether (Ansul Ether 141)
Solvent 4 was mineral spirits
Solvent 5 was chlorothene, this is a comparative example

* comparative example
\+ did not cure properly

Example 7

A series of compositions were prepared using a lower viscosity polydiorganosiloxane. Mixtures were prepared using the amounts of ingredients shown in Table VII. The polymer A was the polymer of example 1 having a viscosity of 50 Pa•s. Polymer B was a hydroxylendblocked polydimethylsiloxane having a viscosity of 2.0 Pa•s. Polymer A contained about 0.08 weight percent hydroxyl groups, while polymer B contained about 0.15 weight percent hydroxyl groups. Filler A and filler B are as described in Example 1, as are the chain extender and crosslinker. DMF is dimethylformamide, added to keep the crosslinker in solution. The solvent was Kwick Dry.

Table VI

| Sample Number | 1+ | 2+ | 3+ | 4+ | 5+ | 6+ | 7 |
|---|---|---|---|---|---|---|---|
| polymer A | 45.45 | | | | | | |
| polymer B | 45.45 | 45.45 | 45.45 | 45.45 | 45.45 | 45.45 | |
| filler A | 51.66 | 51.66 | 51.66 | 36.86 | 36.86 | 51.66 | 25.83 |
| filler B | -.- | -.- | -.- | -.- | -.- | -.- | 25.83 |
| chain extender | 2.35 | 2.35 | 4.70 | 2.35 | 4.70 | 4.70 | 4.70 |
| crosslinker | 1.40 | 1.40 | 2.80 | 1.40 | 2.80 | 2.80 | 2.80 |
| DMF | 0.95 | 0.95 | 1.90 | 0.95 | 1.90 | 1.90 | 1.90 |
| solvent | -.- | -.- | -.- | -.- | -.- | 10.00 | 10.00 |
| Button Slump, cm (in)/sec. | 0/30 | 0/30 | 0/30 | 0.8 (0.3)/30 | 10 (4)/12 | 10 (4)/2 | 10 (4)/2 |
| Self Leveling | no | no | no | no | no | * | yes |

* slight flow observed
\+ comparative examples

A comparison of samples 1 and 2 shows that lowering the viscosity of the polymer will not cause self leveling. Samples 4 and 5 show that decreasing the fill level raises the button slump value, but does not cause self leveling. Samples 3 and 6 show that adding solvent alone does not cause self leveling although it does increase button flow. Sample 9 containing both treated and untreated filler with solvent showed self leveling.

## Claims

1. A composition which is stable in the absence of moisture but curable at room temperature upon exposure to moisture to a silicone elastomer and being self leveling when applied to a horizontal surface, said composition consisting essentially of a mixture prepared by mixing under anhydrous conditions

(A) 100 parts by weight of a hydroxyl endblocked polydiorganosiloxane having a viscosity at 25 °C of from 1.8 to 125 Pa•s and in which the organic groups are selected from the group consisting of methyl, ethyl, vinyl, phenyl and 3,3,3-trifluoropropyl radicals, in said polydiorganosiloxane no more than 50 percent of the organic groups being phenyl or 3,3,3-trifluoropropyl radicals and no more than 10 percent of the organic groups being vinyl radicals,

(B) from 1 to 150 parts by weight of non-acidic, non-reinforcing filler having an average particle size of from 1 to 8 micrometers, said filler consisting of from 95 to 5 percent by weight of an untreated filler and from 5 to 95 percent by weight of a treated filler, said treated filler having been treated with a treating agent selected from the group consisting of calcium stearate and stearic acid,

(C) from 2.5 to 10 parts by weight inclusive of a silane of the general formula

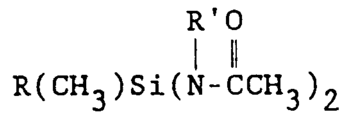

in which R is an organic radical selected from the group consisting of methyl, ethyl, vinyl and phenyl, and R' is an organic radical selected from the group consisting of methyl, ethyl and phenyl, said silane being present in an amount sufficient to provide at least one silane molecule per hydroxyl of the polydiorganosiloxane of (A);

(D) a cross linking agent selected from the group consisting of 0.3 to 4.2 parts by weight inclusive of

(i) a trifunctional silane of the general formula

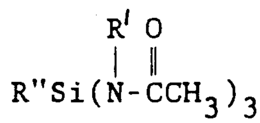

in which R' is defined above and R" is the same as R, at least one of R and R" being vinyl; and

(ii) 1 to 6 parts by weight inclusive of an aminoxysilicon compound having from 1 to 100 silicon atoms per molecule and from 3 to 10 aminoxy groups per molecule, said aminoxy group having a general formula -OX in which X is a monovalent amine radical selected from the group consisting of $-NR_2$ and a heterocyclic amine, R is a monovalent hydrocarbon radical, the -OX group being bonded to silicon atoms through an SiO bond, the remaining valences of the silicon atoms in the aminoxysilicon compound being satisfied by divalent oxygen atoms which link the silicon atoms of the aminoxysilicon compounds having two or more silicon atoms per molecule through silicon-oxygen-silicon bonds and by monovalent hydrocarbon radicals and halogenated monovalent hydrocarbon radicals bonded to the silicon atoms through silicon-carbon bonds, there being an average of at least one monovalent hydrocarbon radical or halogenated monovalent hydrocarbon radical per silicon atom, and

(E) from 1 to 50 percent by weight of the total composition of a diluent selected from the group consisting of non-reactive silicone fluid and organic diluent, said organic diluent selected from the group consisting of aliphatic petroleum naphthas, aromatic hydrocarbons and polyethers, said silane (C) and said crosslinking agent (D) being present in amounts sufficient to provide a combined weight of at least 3.5 parts by weight per 100 parts by weight of (A) and said crosslinking agent (D) present in an amount which is not greater than the weight of the silane (C), said composition when cured for seven days at 25 °C exposed to an air atmosphere having 50 percent relative humidity resulting in a silicone elastomer having an elongation of at least 600 percent, a durometer on the Shore A scale of from 5 to 20 inclusive and a modulus at 150 percent elongation of less than 345 kPa (50 pounds per square inch).

2. The composition of claim 1 in which silane (C) is from 2.5 to 10 parts by weight inclusive of a silane of the general formula

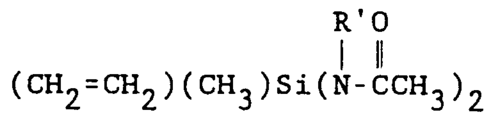

in which R' is an organic radical selected from the group consisting of methyl, ethyl and phenyl.

3. The composition of claim 1 in which the crosslinking agent is 1 to 6 parts by weight inclusive of an aminoxysilicon compound having from 1 to 100 silicon atoms per molecule and from 3 to 10 aminoxy groups per molecule, said aminoxy group having a general formula -OX in which X is a monovalent amine radical selected from the group consisting of $-NR_2$ and a heterocyclic amine, R is a monovalent hydrocarbon radical, the -OX group being bonded to silicon atoms through an SiO bond, the remaining valences of the silicon atoms in the aminoxysilicon compound being satisfied by divalent oxygen atoms which link the silicon atoms of the aminoxysilicon compounds having two or more silicon atoms per molecule through silicon-oxygen-silicon bonds and by monovalent hydrocarbon radicals and halogenated monovalent hydrocarbon radicals bonded to the silicon atoms through silicon-carbon bonds, there being an average of at least one monovalent hydrocarbon radical or halogenated monovalent hydrocarbon radical per silicon atom.

4. A method of preparing a composition which is stable in the absence of moisture but curable at room temperature upon exposure to moisture to a silicone elastomer and being self leveling when applied to a horizontal surface comprising

I. mixing to obtain a homogeneous mixture,

(A) 100 parts by weight of a hydroxyl endblocked polydiorganosiloxane having a viscosity at 25°C of from 1.8 to 125 Pa•s and in which the organic groups are selected from the group consisting of methyl, ethyl, vinyl, phenyl and 3,3,3-trifluoropropyl radicals, in said polydiorganosiloxane no more than 50 percent of the organic groups being phenyl or 3,3,3-trifluoropropyl radicals and no more than 10 percent of the organic groups being vinyl radicals,

(B) from 1 to 150 parts by weight of non-acidic, non-reinforcing filler having an average particle size of from 1 to 8 micrometers, said filler consisting of from 95 to 5 percent by weight of an untreated filler and from 5 to 95 percent by weight of a treated filler, said treated filler having been treated with a treating agent selected from the group consisting of calcium stearate and stearic acid,

II. mixing thoroughly with the homogeneous mixture obtained from (I) under essentially anhydrous conditions,

(C) from 2.5 to 10 parts by weight inclusive of a silane of the general formula

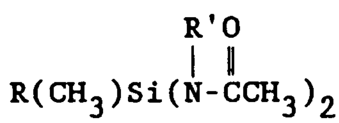

in which R is an organic radical selected from the group consisting of methyl, ethyl, vinyl and phenyl and R' is an organic radical selected from the group consisting of methyl, ethyl and phenyl, said silane being present in an amount sufficient to provide at least one silane molecule per hydroxyl of the polydiorganosiloxane of (A);

(D) a crosslinking agent selected from the group consisting of 0.3 to 4.2 parts by weight inclusive of

(i) a trifunctional silane of the general formula

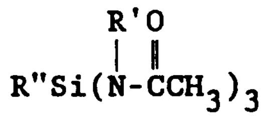

in which R' is defined above and R" is the same as R, at least one of R and R" being vinyl; and

(ii) 1 to 6 parts by weight inclusive of an aminoxysilicon compound having from 1 to 100 silicon atoms per molecule and from 3 to 10 aminoxy groups per molecule, said aminoxy group having a general formula -OX in which X is a monovalent amine radical selected from the group consisting of $-NR_2$ and a heterocyclic amine, R is a monovalent hydrocarbon radical, the -OX group being bonded to silicon atoms through an SiO bond, the remaining valences of the silicon atoms in the aminoxysilicon compound being satisfied by divalent oxygen atoms which link the silicon atoms of the aminoxysilicon compounds having two or more silicon atoms per molecule through silicon-oxygen-silicon bonds and by monovalent hydrocarbon radicals and halogenated monovalent hydrocarbon radicals bonded to the silicon atoms through silicon-carbon bonds, there being an average of at least one monovalent hydrocarbon radical or halogenated monovalent hydrocarbon radical per silicon atom, said silane (C) and said crosslinking agent (D) being present in amounts sufficient to provide a combined weight of at least 3.5 parts by weight per 100 parts by weight of (A) and said crosslinking agent (D) present in an amount which is not greater than the weight of the silane (C), and

(E) from 1 to 50 percent by weight of the total composition of a diluent selected from the group consisting of non-reactive silicone fluid and organic diluent, said organic diluent selected from the group consisting of aliphatic petroleum naphthas, aromatic hydrocarbons and polyethers, and

III. placing the resulting composition obtained in (II) in a storage container which essentially excludes moisture from contacting this composition and maintains this composition under an essentially anhydrous condition; said composition when cured for seven days at 25°C exposed to an air atmosphere having 50 percent relative humidity resulting in a silicone elastomer having an elongation of at least 600 percent, a durometer on the Shore A scale of from 5 to 20 inclusive and a modulus at 150 percent elongation of less than 345 kPa (50 pounds per square inch).

**5.** Use of a composition according to any of claims 1 to 3 as a highway joint sealant.

## Patentansprüche

**1.** Zusammensetzung, die in Abwesenheit von Feuchtigkeit stabil ist, jedoch bei Raumtemperatur durch Aussetzen von Feuchtigkeit zu einem Siliconelastomer härtbar ist und bei Aufbringen auf horizontale Flächen selbstausgleichend ist, wobei die Zusammensetzung im wesentlichen aus einer Mischung besteht, die hergestellt wurde durch Mischen unter wasserfreien Bedingungen von

(A) 100 Gewichtsteilen eines endständige blockierende Hydroxylgruppen aufweisenden Polydiorganolsiloxans mit einer Viskosität bei 25°C von 1,8 bis 125 Pa.s und bei dem die organischen Gruppen aus der aus Methyl-, Ethyl-, Vinyl-, Phenyl- und 3,3,3-Trifluorpropylresten bestehenden Gruppe ausgewählt sind, wobei in dem Polydiorganosiloxan nicht mehr als 50% der organischen Gruppen Phenyl- oder 3,3,3-Fluorproplyreste sind und nicht mehr als 10% der organischen Gruppen Vinylreste sind,

(B) von 1 bis 150 Gewichtsteilen eines nicht-sauren, nichtverstärkenden Füllstoffes mit einer mittleren Teilchengröße von 1-8 µm, wobei der Füllstoff zu 95 bis 5 Gewichtsprozent aus nichtbehandeltem Füllstoff und zu 5 bis 95 Gewichtsprozent aus behandeltem Füllstoff besteht, wobei dieser behandelte Füllstoff mit einem aus der aus Calziumstearat und Stearinsäure bestehenden Gruppe ausgewählten Behandlungsmittel behandelt wurde,

(C) von 2,5 bis einschließlich 10 Gewichtsteilen eines Silans der allgemeinen Formel

$$\begin{array}{c} \quad\quad R'\,O \\ \quad\quad |\ \ \| \\ R(CH_3)Si(N\text{-}CCH_3)_2 \end{array}$$

in der R ein organischer Rest ist, ausgewählt aus der aus Methyl, Ethyl, Vinyl und Phenyl bestehenden Gruppe und R' ein organischer Rest ist, ausgewählt aus der aus Methyl, Ethyl und Phenyl bestehenden Gruppe, wobei das Silan in einer ausreichenden Menge vorhanden ist, so daß mindestens ein Silanmolekül pro Hydroxyl des Polydiorganosiloxans von (A) vorhanden ist,

(D) einem Vernetzungsmittel, ausgewählt aus der Gruppe bestehend aus 0,3 bis einschließlich 4,2 Gewichtsteilen von

(i) einem trifunktionellen Silan der allgemeinen Formel

$$\begin{array}{c} \quad\quad R'\,O \\ \quad\quad |\ \ \| \\ R''Si(N\text{-}CCH_3)_3 \end{array}$$

in der R' die zuvor angegebene Bedeutung hat und R'' gleich R ist und mindestens eines von R und R'' Vinyl ist, und

(ii) 1 bis einschließlich 6 Gewichtsteilen einer Aminoxysiliconverbindung mit 1 bis 100 Siliziumatomen pro Molekül und 3 bis 10 Aminoxygruppen pro Molekül, wobei die Aminoxygruppe der allgemeinen Formel -OX genügt, in der X ein einwertige Aminogruppe ist, ausgewählt aus der aus $NR_2$ und einem heterocyclischen Amin bestehenden Gruppe und R ein einwertiger Kohlenwasserstoffrest ist, die -OX-Gruppe durch eine SiO-Bindung an Siliziumatome gebunden ist, die verbleibenden Valenzen der Siliziumatome in der Aminoxy-Siliconverbindung durch zweiwertige Sauerstoffatome abgesättigt sind, die die Siliziumatome der Aminoxyverbindungen mit 2 oder mehr Siliziumatomen pro Molekül durch Silizium-Sauerstoff-Siliziumbindungen verbinden oder durch einwertige Kohlenwasserstoffreste oder halogenierte Kohlenwasserstoffreste abgesättigt sind, die an die Siliziumatome durch Silizium-Kohlenstoffbindungen gebunden sind, wobei im Mittel mindestens ein einwertiger Kohlenwasserstoffrest oder halogenierter einwertiger Kohlenwasserstoffrest pro Siliziumatom vorhanden ist und

(E) von 1-50 Gewichtsprozent der Gesamtzusammensetzung eines Verdünnungsmittels, ausgewählt aus der Gruppe bestehend aus nicht reaktiver flüssiger Siliconverbindung und organischem Verdünnungsmittel, ausgewählt aus der aus aliphatischen Naphtha, aromatischen Kohlenwasserstoffen und Polyethern bestehenden Gruppe, wobei das Silan (C) und das Vernetzungsmittel (D) in ausreichenden Mengen vorhanden sind, um ein kombiniertes Gewicht von mindestens 3,5 Gewichtsteilen pro 100 Gewichtsteile von (A) zu ergeben und das Vernetzungsmittel (D) nicht in einer größeren Mengee als das Gewicht des Silans (C) vorhanden ist, wobei die Zusammensetzung nach 7 Tage Härtung bei 25 °C durch Aussetzen einer Luftatmosphäre mit 50% relativer Feuchte ein Siliconelastomer ergibt, das mindestens eine Dehnung von 600%, eine Durometer Härte auf der Shore A Skala von 5 bis einschließlich 20 und einen Modul bei 150% Dehnung von unter 345 kPa (50 Pfund/Inch$^2$) aufweist.

**2.** Zusammensetzung nach Anspruch 1,
**dadurch gekennzeichnet**,
daß das Silan (C) von 2,5 bis einschließlich 10 Gewichtsteilen eines Silans der allgemeinen Formel

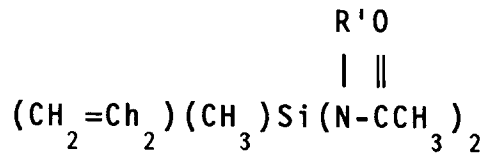

in der R' eine organische Gruppe, ausgewählt aus der aus Methyl, Ethyl und Phenyl bestehenden Gruppe ist.

3. Zusammensetzung nach Anspruch 1,
**dadurch gekennzeichnet,**
daß das Vernetzungsmittel 1 bis einschließlich 6 Gewichtsteile einer Aminoxysiliconverbindung ist mit 1 bis 100 Siliziumatomen pro Molekül und 3 bis 10 Aminoxygruppen pro Molekül, wobei die Aminoxygruppe der allgemeinen Formel -OX genügt, in der X eine einwertige Aminogruppe ist, ausgewählt aus der aus $-NR_2$ und einem heterocyclischen Amin bestehenden Gruppe, R ein einwertiger Kohlenwasserstoffrest ist, die -OX-Gruppe durch SiO-Bindung an Siliziumatome gebunden ist, die verbleibenden Valenzen der Siliziumatome in der Aminoxysiliconverbindung durch zweiwertige Sauerstoffatome abgesättigt sind, die die Siliziumatome der Aminoxysiliconverbindungen mit 2 oder mehr Siliziumatomen pro Molekül durch Silizium-Sauerstoff-Siliziumbindungen verbinden und durch einwertige Kohlenwasserstoffreste und halogenierte einwertige Kohlenwasserstoffreste abgesättigt sind, die an die Siliziumatome durch Silizium-Kohlenstoffbindungen gebunden sind, wobei im Mittel mindestens ein einwertiger Kohlenwasserstoffrest oder halogenierter einwertiger Kohlenwasserstoffrest pro Siliziumatom vorhanden ist.

4. Verfahren zum Herstellen einer Zusammensetzung, die in Abwesenheit von Feuchtigkeit stabil ist, jedoch bei Raumtemperatur durch Aussetzen von Feuchtigkeit zu einem Siliconelastomer härtbar ist und bei Aufbringen auf horizontale Flächen selbstausgleichend ist durch

I. Mischen, um eine homogene Mischung zu erhalten von

(A) 100 Gewichtsteile eines endständige blockierende Hydroxylgruppen aufweisenden Polydiorganosiloxans mit einer Viskosität bei 25°C von 1,8 bis 125 Pa.s und bei dem die organischen Gruppen aus der aus Methyl-, Ethyl-, Vinyl-, Phenyl- und 3,3,3-Trifluorpropylresten bestehenden Gruppe ausgewählt sind, wobei in dem Polydiorganosiloxan nicht mehr als 50% der organischen Gruppen Phenyl- oder 3,3,3-Trifluorpropylreste sind und nicht mehr als 10% der organischen Gruppen Vinylreste sind,

(B) von 1 bis 150 Gewichtsteilen eines nicht-sauren, nichtverstärkenden Füllstoffes mit einer mittleren Teilchengröße von 1 bis 8 µm, wobei der Füllstoff zu 95 bis 5 Gewichtsprozent aus nichtbehandeltem Füllstoff und zu 5 bis 95 Gewichtsprozent aus behandeltem Füllstoff besteht, wobei der behandelte Füllstoff mit einem aus der Gruppe aus Calziumstearat und Stearinsäure bestehenden Gruppe ausgewählten Behandlungsmittel behandelt wurde,

II. Einmischen in die aus (I) erhaltene homogene Mischung unter im wesentlichen wasserfreien Bedingungen,

(C) von 2,5 bis einschließlich 10 Gewichtsteilen eines Silans der allgemeinen Formel

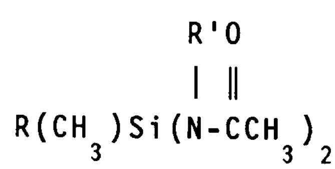

in der R ein organischer Rest ist, ausgewählt aus der aus Methyl Ethyl, Vinyl und Phenyl bestehenden Gruppe, und R' ein organischer Rest ist, ausgewählt aus der aus Methyl, Ethyl und Phenyl bestehenden Gruppe, wobei das Silan in einer ausreichenden Menge vorhanden ist, so daß mindestens 1 Silanmolekül pro Hydroxyl des Polydiorganosilans von (A) vorhanden ist,

(D) einem Vernetzungsmittel, ausgewählt aus der Gruppe bestehend aus 0,3 bis einschließlich 4,2 Gewichtsteilen von (i) einem trifunktionellen Silan der allgemeinen Formel

$$\begin{array}{l} \quad\;\; R'O \\ \quad\;\;\; | \;\; \| \\ R''Si(N-CCH_3)_3 \end{array}$$

in der R' die zuvor angegebene Bedeutung hat und R'' gleich R ist und mindestens eines von R und R'' Vinyl ist und

(ii) 1 bis einschließlich 6 Gewichtsteilen einer Aminoxysiliconverbindung mit 1 bis 100 Siliziumatomen pro Molekül und 3 bis 10 Aminoxygruppen pro Molekül, wobei die Aminoxygruppe der allgemeinen Formel -OX genügt, in der X eine einwertige Aminogruppe ist, ausgewählt aus der aus $-NR_2$ und einem heterocyclischen Amin bestehenden Gruppe und R ein einwertiger Kohlenwasserstoffrest ist, die -OX-Gruppe durch eine SiO-Bindung an Siliziumatome gebunden ist, die verbleibenden Valenzen der Siliziumatome in der Aminoxysiliconverbindung durch zweiwertige Sauerstoffatome abgesättigt sind, die die Siliziumatome der Aminoxyverbindungen mit 2 oder mehr Siliziumatomen pro Molekül durch Silizium-Sauerstoff-Siliziumbindungen verbinden und durch einwertige Kohlenwasserstoffreste oder halogenierte Kohlenwasserstoffreste abgesättigt sind, die an die Siliziumatome durch Silizium-Kohlenstoffbindungen gebunden sind, wobei im Mittel mindestens ein einwertiger Kohlenwasserstoffrest oder halogenierter einwertiger Kohlenwasserstoffrest pro Siliziumatom vorhanden ist, wobei das Silan (C) und das Vernetzungmittel (D) in ausreichenden Mengen vorhanden sind, um ein kombiniertes Gewicht von mindestens 3,5 Gewichtsteile pro 100 Gewichtsteile von (A) zu ergeben und das Vernetzungsmittel nicht in einer größeren Menge als das Gewicht des Silans (C) vorhanden ist und

(E) von 1 bis 50 Gewichtsprozent der Zusammensetzung eines Verdünnungsmittels, ausgewählt aus der Gruppe bestehend aus nichtreaktiver flüssiger Siliconverbindung und organischem Verdünnungsmittel, ausgewählt aus der aus aliphatischen Naphtha, aromatischen Kohlenwasserstoffen und Polyethern bestehenden Gruppe und

III. Anordnen der aus II erhaltenen Zusammensetzung in einem Lagerbehälter, der die Zusammensetzung im wesentlichen von Feuchtigkeit ausschließt und Aufrechterhalten der Zusammensetzung unter einer im wesentlichen wasserfreien Bedingung, wobei die Zusammensetzung nach 7 Tage Härtung bei 25 °C durch Aussetzen einer Luftatmosphäre mit 50% relativer Luftfeuchte ein Siliconelastomer ergibt, das mindestens eine Dehnung von 600%, eine Durometer Härte auf der Shore A Skala von 5 bis einschließlich 20 und einem Modul bei 150% Dehnung von unter 345 kPa (50 Pfund pro $Inch^2$) aufweist.

**5.** Verwendung einer Zusammensetzung nach einem der Ansprüche 1 bis 3 als Dichtungsmittel zum Verbinden eines Straßenbelages.

## Revendications

**1.** Composition qui est stable en l'absence d'humidité mais durcissable à température ambiante, lorsqu'elle est exposée à de l'humidité, en un élastomère de silicone, et étant autonivelante lorsqu'on l'applique sur une surface horizontale, ladite composition étant essentiellement constituée d'un mélange préparé en mélangeant dans des conditions anhydres

(A) 100 parties en poids d'un polydiorganosiloxane bloqué à ses extrémités par des groupes hydroxyles, ayant une viscosité à 25 °C de 1,8 à 125 Pa.s et dans lequel les groupes organiques sont choisis dans le groupe constitué des radicaux méthyle, éthyle, vinyle, phényle et 3,3,3-trifluoropropyle, dans ledit polydiorganosiloxane pas plus de 50 pour cent des groupes organiques étant des radicaux phényle ou 3,3,3-trifluoropropyle et pas plus de 10 pour cent des groupes organiques étant des radicaux vinyle,

(B) de 1 à 150 parties en poids de charge non acide, non renforçante, ayant une taille moyenne des particules de 1 à 8 $\mu$m, ladite charge étant constituée de 95 à 5 pour cent en poids d'une charge non traitée et de 5 à 95 pour cent en poids d'une charge traitée, ladite charge traitée ayant été traitée avec un agent traitant choisi dans le groupe constitué du stéarate de calcium et de l'acide stéarique,

(C) de 2,5 à 10 parties en poids, inclusivement, d'un silane de formule générale

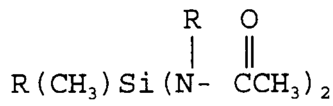

où R est un radical organique choisi dans le groupe constitué des radicaux méthyle, éthyle, vinyle et phényle, et R' est un radical organique choisi dans le groupe constitué des radicaux méthyle, éthyle et phényle, ledit silane étant présent en une quantité suffisante pour fournir au moins une molécule de silane par groupe hydroxyle du polydiorganosiloxane de (A) ;

(D) un agent de réticulation choisi dans le groupe constitué de 0,3 à 4,2 parties en poids, inclusivement, de

(i) un silane trifonctionnel de formule générale

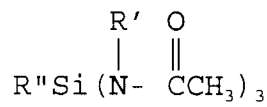

où R' est défini ci-dessus et R" est le même que R, au moins l'un de R et R" étant un radical vinyle ; et

(ii) 1 à 6 parties en poids, inclusivement, d'un composé aminoxysilicié ayant de 1 à 100 atomes de silicium par molécule et de 3 à 10 groupes aminoxy par molécule, ledit groupe aminoxy ayant une formule générale -OX où X est un radical d'amine monovalent choisi dans le groupe constitué de $-NR_2$ et d'une amine hétérocyclique, R est un radical hydrocarboné monovalent, le groupe -OX étant lié à des atomes de silicium par une liaison SiO, les valences restantes des atomes de silicium dans le composé aminoxysilicié étant satisfaites par des atomes d'oxygène divalents qui relient les atomes de silicium des composés aminoxysiliciés ayant deux atomes de silicium ou plus par molécule par des liaisons silicium-oxygène-silicium, et par des radicaux hydrocarbonés monovalents et des radicaux hydrocarbonés halogénés monovalents liés aux atomes de silicium par des liaisons silicium-carbone, une moyenne d'au moins un radical hydrocarboné monovalent ou radical hydrocarboné halogéné monovalent étant présente par atome de silicium, et

(E) de 1 à 50 pour cent en poids, par rapport à la composition totale, d'un diluant choisi dans le groupe constitué d'un fluide de silicone non réactif et d'un diluant organique, ledit diluant organique étant choisi dans le groupe constitué des naphtas de pétrole aliphatiques, des hydrocarbures aromatiques et des polyéthers, ledit silane (C) et ledit agent de réticulation (D) étant présents en quantités suffisantes pour fournir un poids combiné d'au moins 3,5 parties en poids pour 100 parties en poids de (A), et ledit agent de réticulation (D) étant présent en une quantité qui n'est pas supérieure au poids du silane (C), ladite composition, lorsqu'elle est durcie pendant sept jours à 25 °C, exposée à une atmosphère d'air ayant 50 pour cent d'humidité relative, donnant un élastomère de silicone ayant un allongement d'au moins 600 pour cent, une dureté sur l'échelle Shore A de 5 à 20, au total, et un module à 150 pour cent d'allongement inférieur à 345 kPa.

**2.** Composition selon la revendication 1, dans laquelle le silane (C) est de 2,5 à 10 parties en poids, au total, d'un silane de formule générale

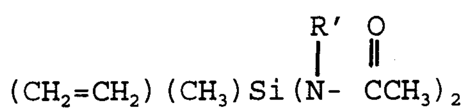

où R' est un radical organique choisi dans le groupe constitué des radicaux méthyle, éthyle et phényle.

**3.** Composition selon la revendication 1, dans laquelle l'agent de réticulation est de 1 à 6 parties en poids, au total, d'un composé aminoxysilicié ayant de 1 à 100 atomes de silicium par molécule et de 3 à 10

groupes aminoxy par molécule, ledit groupe aminoxy ayant une formule générale -OX où X est un radical d'amine monovalent choisi dans le groupe constitué de $-NR_2$ et d'une amine hétérocyclique, R est un radical hydrocarboné monovalent, le groupe -OX étant lié à des atomes de silicium par une liaison SiO, les valences restantes des atomes de silicium dans le composé aminoxysilicié étant satisfaites par des atomes d'oxygène divalents qui relient les atomes de silicium des composés aminoxysiliciés ayant deux atomes de silicium ou plus par molécule par des liaisons silicium-oxygène-silicium, et par des radicaux hydrocarbonés monovalents et des radicaux hydrocarbonés halogénés monovalents liés aux atomes de silicium par des liaisons silicium-carbone, une moyenne d'au moins un radical hydrocarboné monovalent ou radical hydrocarboné halogéné monovalent étant présente par atome de silicium.

**4.** Procédé de préparation d'une composition qui est stable en l'absence d'humidité mais durcissable à température ambiante, lorsqu'elle est exposée à de l'humidité, en un élastomère de silicone, et étant autonivelante lorsqu'on l'applique sur une surface horizontale, comprenant

I. le mélange, pour obtenir un mélange homogène, de

(A) 100 parties en poids d'un polydiorganosiloxane bloqué à ses extrémités par des groupes hydroxyles, ayant une viscosité à 25 °C de 1,8 à 125 Pa.s et dans lequel les groupes organiques sont choisis dans le groupe constitué des radicaux méthyle, éthyle, vinyle, phényle et 3,3,3-trifluoropropyle, dans ledit polydiorganosiloxane pas plus de 50 pour cent des groupes organiques étant des radicaux phényle ou 3,3,3-trifluoropropyle et pas plus de 10 pour cent des groupes organiques étant des radicaux vinyle,

(B) 1 à 150 parties en poids de charge non acide, non renforçante, ayant une taille moyenne des particules de 1 à 8 µm, ladite charge étant constituée de 95 à 5 pour cent en poids d'une charge non traitée et de 5 à 95 pour cent en poids d'une charge traitée, ladite charge traitée ayant été traitée avec un agent traitant choisi dans le groupe constitué du stéarate de calcium et de l'acide stéarique,

II. le mélange soigneux avec le mélange homogène obtenu en (I), dans des conditions essentiellement anhydres,

(C) de 2,5 à 10 parties en poids, inclusivement, d'un silane de formule générale

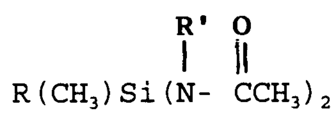

où R est un radical organique choisi dans le groupe constitué des radicaux méthyle, éthyle, vinyle et phényle, et R' est un radical organique choisi dans le groupe constitué des radicaux méthyle, éthyle et phényle, ledit silane étant présent en une quantité suffisante pour fournir au moins une molécule de silane par groupe hydroxyle du polydiorganosiloxane (A) ;

(D) d'un agent de réticulation choisi dans le groupe constitué de 0,3 à 4,2 parties en poids, inclusivement, de

(i) un silane trifonctionnel de formule générale

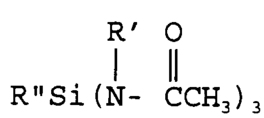

où R' est défini ci-dessus et R" est le même que R, au moins l'un de R et R" étant un radical vinyle ; et

(ii) 1 à 6 parties en poids, au total, d'un composé aminoxysilicié ayant de 1 à 100 atomes de silicium par molécule et de 3 à 10 groupes aminoxy par molécule, ledit groupe aminoxy ayant une formule générale -OX où X est un radical d'amine monovalent choisi dans le groupe constitué de $-NR_2$ et d'une amine hétérocyclique, R est un radical hydrocarboné monovalent, le groupe -OX étant lié à des atomes de silicium par une liaison SiO, les valences restantes des atomes de silicium dans le composé aminoxysilicié étant satisfaites par des atomes d'oxygène divalents qui relient les atomes de silicium des composés aminoxysiliciés ayant deux atomes de silicium ou plus par molécule par des liaisons silicium-oxygène-silicium, et

par des radicaux hydrocarbonés monovalents et des radicaux hydrocarbonés halogénés monovalents liés aux atomes de silicium par des liaisons silicium-carbone, une moyenne d'au moins un radical hydrocarboné monovalent ou radical hydrocarboné halogéné monovalent étant présente par atome de silicium, ledit silane (C) et ledit agent de réticulation (D) étant présents en quantités suffisantes pour fournir un poids combiné d'au moins 3,5 parties en poids pour 100 parties en poids de (A), et ledit agent de réticulation (D) étant présent en une quantité qui n'est pas supérieure au poids du silane (C), et

(E) de 1 à 50 pour cent en poids, par rapport à la composition totale, d'un diluant choisi dans le groupe constitué d'un fluide des silicone non réactif et d'un diluant organique, ledit diluant organique étant choisi dans le groupe constitué des naphtas de pétrole aliphatiques, des hydrocarbures aromatiques et des polyéthers, et

III. le placement de la composition résultante, obtenue en (II), dans un récipient de stockage qui empêche essentiellement l'humidité d'entrer en contact avec cette composition et maintient cette composition dans un état essentiellement anhydre ; ladite composition, lorsqu'elle est durcie pendant sept jours à 25 °C, exposée à une atmosphère d'air ayant 50 pour cent d'humidité relative, donnant un élastomère de silicone ayant un allongement d'au moins 600 pour cent, une dureté sur l'échelle Shore A de 5 à 20, au total, et un module à 150 pour cent d'allongement inférieur à 345 kPa.

**5.** Utilisation d'une composition selon l'une quelconque des revendications 1 à 3 comme joint d'étanchéité pour chaussée.